# EUROPÄISCHE PATENTSCHRIFT

(11) **EP 2 580 088 B1**
(45) Veröffentlichungstag und Bekanntmachung des Hinweises auf die Patenterteilung: **17.10.2018**
(21) Anmeldenummer: 11725323.7
(22) Anmeldetag: 23.05.2011
(51) Int. Cl.: B29C 44/12, B29C 44/34, B60N 2/58, B60N 2/70, B60N 2/80, B29L 31/30

(54) **KOPFSTÜTZE UND VERFAHREN ZUR HERSTELLUNG EINER KOPFSTÜTZE**
HEADREST AND METHOD FOR MANUFACTURING A HEADREST
APPUIE-TÊTE ET PROCÉDÉ DE FABRICATION D'UN APPUIE-TÊTE

(30) Priorität: 09.06.2010 DE 102010023246
(43) Veröffentlichungstag der Anmeldung: 17.04.2013
(73) Patentinhaber: Adient Luxembourg Holding S.à r.l., 1855 Luxembourg (LU)
(72) Erfinder: MORILHAT, Philippe, F-67200 Strasburg (FR); REINER, Sophie, F-67000 Strasburg (FR); MARTINI, Ana, Paula, F-67240 Gries (FR)
(74) Vertreter: Schwöbel, Thilo K.
(86) Internationale Anmeldenummer: PCT/EP2011/002554
(87) Internationale Veröffentlichungsnummer: WO 2011/154095

(56) Entgegenhaltungen:
- FR-A1- 2 911 308
- JP-A- 9 011 252
- JP-A- 9 056 939
- JP-A- 9 267 679
- US-A- 4 003 599
- US-A- 5 611 977
- US-A- 5 910 081
- US-A- 5 967 612
- US-A1- 2003 066 133
- US-A1- 2004 143 903

## Beschreibung

Die vorliegende Erfindung betrifft eine Kopfstütze und ein Verfahren zur Herstellung einer Kopfstütze, insbesondere einer Kraftfahrzeugkopfstütze, wobei die Kopfstütze einen Bezug und ein Schaummaterial aufweist, wobei das Schaummaterial zumindest bereichsweise den Bezug ausfüllt.

### Stand der Technik

Bekannt sind Kopfstützen und Verfahren zur Herstellung von Kopfstützen, wobei die Einbringung des Schaummaterials in den Bezug der Kopfstütze zumindest teilweise in flüssigem Zustand des Schaummaterials erfolgt, sogenannte "Pour-in-Place"-Technik, d.h. das Schaummaterial ist als am Ort gegossenes Schaummaterial vorgesehen bzw. der Bezug ist eingeschäumt vorgesehen, wie offenbart in JP 9 011252 A.

Bei solchen Kopfstützen müssen vor dem Einbringen des Schaummaterials Strukturelemente in den Bezug eingebracht werden, etwa Kopfstützenstangen oder dergleichen. Zur Einbringung der Strukturelemente ist eine Öffnung im Bezug der Kopfstütze zwingend erforderlich, die beim Einbringen des Schaummaterials verschlossen sein muss. Dies erfordert die Beachtung gewisser Bedingungen hinsichtlich der Gestaltung der Form der Kopfstütze und der Anordnung der Öffnung.

### Offenbarung der Erfindung

Eine Aufgabe der vorliegenden Erfindung ist die Bereitstellung einer Kopfstütze und eines Verfahrens zur Herstellung einer Kopfstütze, insbesondere einer Kraftfahrzeugkopfstütze, wobei die Bedingungen hinsichtlich der Gestaltung der Form der Kopfstütze und der Anordnung der Öffnung nicht oder zumindest weniger eingeschränkt sind als bei bekannten Kopfstützen bzw. deren Herstellungsverfahren und wobei die ästhetischen Anforderungen an solche Kopfstützen - insbesondere im Bereich der Öffnung - gegenüber bekannten Lösungen nicht verschlechtert sind.

Die Aufgabe wird gelöst durch eine Kopfstütze, insbesondere Kraftfahrzeugkopfstütze, wobei die Kopfstütze einen Bezug und ein Schaummaterial aufweist, wobei das Schaummaterial zumindest bereichsweise den Bezug ausfüllt, wobei die Kopfstütze derart hergestellt ist, dass das Schaummaterial zum Zeitpunkt des Einbringens des Schaummaterials in den Bezug zumindest teilweise flüssig ist, wobei der Bezug wenigstens ein Verschlusselement aufweist, wobei mittels des Verschlusselements eine vor dem Einbringen des Schaummaterials vorhandene Öffnung im Bezug verschließbar ist, wobei der Bezug einen Reißverschluss als Verschlusselement aufweist, gemäß Anspruch 1. Es ist hierdurch erfindungsgemäß vorteilhaft möglich, dass eine große Gestaltungsfreiheit hinsichtlich der Form der Kopfstütze und hinsichtlich der Positionierung der Öffnung im Bezug der Kopfstütze gegeben ist.

Es ist hierdurch erfindungsgemäß vorteilhaft möglich, eine besonders stabile Verbindung des Bezugs im Bereich der Öffnung zu realisieren, die darüber hinaus auch noch eine besonders gute Dichtigkeit gegenüber dem flüssigen Schaummaterial aufweist. Hierdurch ergibt sich eine besonders einfache und effektive Möglichkeit, ohne Verschlechterung der ästhetischen Wirkung der Kopfstütze eine größere Freiheit bei der Anordnung des Verschlusselements zu erhalten als bei herkömmlichen Gestaltungen der Kopfstütze.

Erfindungsgemäß ist es ferner bevorzugt vorgesehen, dass der Bezug eine innere Nichtsichtseite und eine äußere Sichtseite aufweist, wobei das Verschlusselement ausschließlich von der inneren Nichtsichtseite her sichtbar ist. Letztlich bedeutet dies, dass das Verschlusselement von der Sichtseite her nicht sichtbar ist, so dass sich eine ästhetisch besonders ansprechende äußere Form der Kopfstütze ergibt.

Erfindungsgemäß ist es ferner bevorzugt, dass das Verschlusselement gegenüber einem Austreten des flüssigen Schaummaterials dicht vorgesehen ist. Es ist hierdurch in vergleichsweise einfacher Weise möglich, dass unabhängig von der Anordnung der Öffnung und damit der Anordnung des Verschlusselements an der Kopfstütze wirksam der Austritt des flüssigen Schaummaterials während des Herstellungsprozesses der Kopfstütze verhindert wird.

Weiterhin ist es gemäß der vorliegenden Erfindung vorgesehen, dass der Bezug ein Abdeckelement derart aufweist, dass das Verschlusselement in geschlossenem Zustand des Verschlusselements durch das Abdeckelement abgedeckt ist.

Hierdurch ist es gemäß der vorliegenden Erfindung mit einfachen Mitteln vorteilhaft möglich, eine besonders gute Abdichtung des Bezugs im Bereich des Verschlusselements zu erzielen.

Erfindungsgemäß ist es ferner vorgesehen, dass der Bezug eine vor dem Einbringen des Schaummaterials vorhandene weitere Öffnung aufweist, wobei das Schaummaterial durch die weitere Öffnung in den Bezug einbringbar ist.

Die vorliegende Erfindung bezieht sich ferner auf ein Verfahren zur Herstellung einer Kopfstütze, insbesondere einer Kraftfahrzeugkopfstütze, wobei die Kopfstütze einen Bezug und ein Schaummaterial aufweist, wobei das Schaummaterial zumindest bereichsweise den Bezug ausfüllt, wobei der Bezug ein Verschlusselement aufweist, wobei das Verfahren die folgenden Schritte aufweist:
-- Herstellen des Bezugs und Vorsehen einer Öffnung im Bereich des Verschlusselements,
-- Einbringen von Strukturelementen ins Innere des Bezugs durch die Öffnung,
-- Verschließen der Öffnung durch das Verschlusselement,
-- Einbringen des Schaummaterials ins Innere des Bezugs, wobei das Schaummaterial zum Zeitpunkt des Einbringens zumindest teilweise flüssig ist, wobei der Bezug eine vor dem Einbringen des Schaummaterials vorhandene weitere Öffnung aufweist, wobei das Schaummaterial durch die weitere Öffnung in den Bezug gebracht gemäß Anspruch 5.

Ausführungsbeispiele der Erfindung sind in der Zeichnung dargestellt und in der nachfolgenden Figurenbeschreibung näher erläutert.

### Kurze Beschreibung der Figuren

- **Figur 1**: zeigt eine schematische Schnittansicht einer Kopfstütze mit einer Detailvergrößerung im rechten Teil der Figur 1, wobei die Detailvergrößerung den Bereich eines Verschlusselements umfasst.
- **Figur 2**: zeigt ein Beispiel eines Bezugs einer Kopfstütze gemäß dem Stand der Technik.
- **Figur 3**: zeigt ein Beispiel einer Kopfstütze gemäß dem Stand der Technik, wobei im Bereich einer Öffnung des Bezugs der Kopfstütze kein Verschlusselement angeordnet ist.
- **Figur 4**: zeigt die Innenseite (Nichtsichtseite) eines Bezugs für eine erfindungsgemäße Kopfstütze, wobei der Bezug im Bereich einer Öffnung ein Verschlusselement in Form eines Reißverschlusses aufweist.
- **Figur 5**: zeigt die fertiggestellte Kopfstütze mit einem Bezug gemäß Figur 4, wobei im Bereich der Öffnung des Bezugs ein Verschlusselement in Form eines Reißverschlusses angeordnet ist.

### Figurenbeschreibung

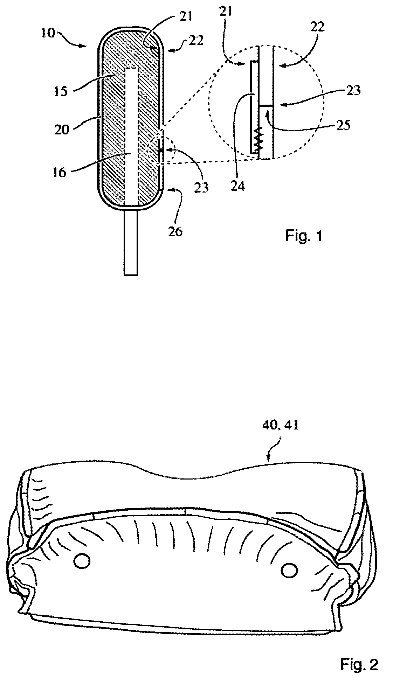

In **Figur 1** ist schematisch eine erfindungsgemäße Kopfstütze 10 in einer Schnittdarstellung abgebildet. Die Kopfstütze 10 weist einen Bezug 20 und ein Strukturelement 16 bzw. eine Mehrzahl von Strukturelementen 16 auf. Der Bezug 20 weist eine Innenseite 21 und eine Außenseite 22 auf, wobei die Innenseite 21 bzw. innere Seite die Nichtsichtseite 21 ist und wobei die Außenseite 22 bzw. äußere Seite die Sichtseite 22 ist, d.h. diejenige Seite des Bezugs 20, die von einem Benutzer der Kopfstütze 10 bei normalem Gebrauch gesehen wird. Im Inneren des Bezugs 20 ist ein Schaummaterial 15 angeordnet, das den Bezug 20 zumindest teilweise ausfüllt.

Die Kopfstütze 10 ist erfindungsgemäß mittels der sog. "Pour-in-Place"-Technik hergestellt. Das bedeutet, dass die Einbringung des Schaummaterials 15 in den Bezug 20 der Kopfstütze 10 zumindest teilweise in flüssigem Zustand des Schaummaterials 15 erfolgt, d.h. das Schaummaterial 15 ist als am Ort gegossenes Schaummaterial vorgesehen bzw. der Bezug 20 ist eingeschäumt vorgesehen.

Um das Strukturelement 16 bzw. die Mehrzahl von Strukturelementen 16 (vor der Einbringung des (flüssigen Materials des) Schaummaterials 15) in den Bezug 20 einzubringen, ist eine Öffnung 23 im Bezug 20 vorgesehen. Die Öffnung 23 muss zur Einbringung des Strukturelements 16 geöffnet sein bzw. werden und sie muss zur Einbringung des Schaummaterials 15 geschlossen sein, damit kein (flüssiges) Schaummaterial 15 aus der (geöffneten oder teilweise geöffneten) Öffnung 23 austreten kann (was das ästhetische Ergebnis beeinträchtigen würde).

Erfindungsgemäß ist es vorgesehen, dass die Öffnung 23 mit einem Verschlusselement 25 verschlossen ist (nachdem das Strukturelement 16 bzw. die Mehrzahl von Strukturelementen 16 in das Innere des Bezugs 20 der Kopfstütze 10 eingebracht ist). Das Verschlusselement 25 kann ein Verschlusselement 25 jeglicher Art sein, wobei jedoch eine Realisierung in Form eines Reißverschlusses als Verschlusselement 25 bevorzugt ist. Die Verwendung eines Reißverschlusses als Verschlusselement 25 hat den Vorteil, dass eine besonders gute Dichtigkeit gegenüber (nach dem Einbringen des Schaummaterials 15 in den Bezug 20) dem auf der Innenseite 21 des Bezugs 20 befindlichen (zumindest zeitweise flüssigen) Schaummaterial 15 möglich ist. Erfindungsgemäß ist die Dichtigkeit des Bezugs 20 gegenüber solchem flüssigen Schaummaterial 15 durch die Anordnung eines Abdeckelements 24 noch vergrößert. Das Abdeckelement 24 ist im Inneren 21 des Bezugs in einem solchen Bereich vorgesehen, dass die Öffnung 23 und damit auch das Verschlusselement 25 abgedeckt wird bzw. zumindest teilweise abgedeckt wird. Erfindungsgemäß ist das Abdeckelement 24 (bzw. eine Mehrzahl verschiedener Abdeckelemente 24) im Bereich eines oder beider Enden des länglich erstreckten Verschlusselements 25 angeordnet (bzw. sind). Im rechten (vergrößerten) Teil der **Figur 1** ist das Abdeckelement 24 im unteren Bereich (d.h. auf einer Seite der Öffnung 23) mit dem Bezug 20 verbunden (angedeutet mittels einer Zick-Zack-Linie), während das Abdeckelement 24 im oberen Bereich (d.h. auf der anderen Seite der Öffnung 23) lediglich auf dem Bezug 20 aufliegt.

Gemäß der vorliegenden Erfindung ist es vorgesehen. dass der Bezug 20 der Kopfstütze 10 auch eine weitere Öffnung 26 aufweist, wobei durch die weitere Öffnung 26 das Schaummaterial 15 (in flüssigem Zustand) in das Innere des Bezugs 20 eingebracht wird.

In **Figur 2** ist ein Beispiel eines Bezugs 40 einer Kopfstütze gemäß dem Stand der Technik dargestellt. Hierbei ist die Innenseite 41 des Bezugs 40 abgebildet.

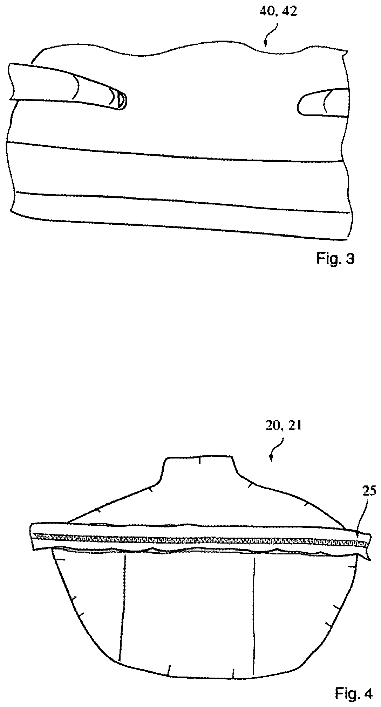

In **Figur** 3 ist ein Beispiel (einer Teilansicht) einer Kopfstütze gemäß dem Stand der Technik abgebildet, wobei im Bereich einer Öffnung des Bezugs 40 der Kopfstütze kein Verschlusselement angeordnet ist. Hierbei ist die Außenseite 42 des Bezugs 40 abgebildet.

In **Figur 4** ist die Innenseite (Nichtsichtseite) 21 des Bezugs 20 für die erfindungsgemäße Kopfstütze 10 dargestellt, wobei der Bezug 20 im Bereich einer Öffnung 23 ein Verschlusselement 25 in Form eines Reißverschlusses aufweist.

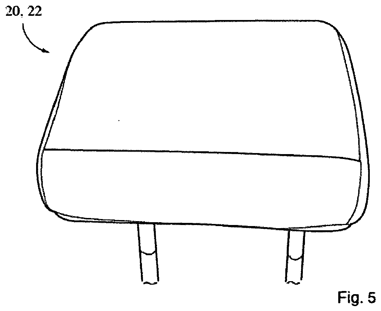

In **Figur** 5 ist die fertiggestellte Kopfstütze 10 mit einem Bezug 20 gemäß **Figur 4** dargestellt, wobei im Bereich der Öffnung 23 des Bezugs 20 das Verschlusselement 25, in Form eines Reißverschlusses angeordnet ist.

### Bezugszeichenliste

- 10: Kopfstütze
- 15: Schaummaterial
- 16: Strukturelement
- 20: Bezug
- 21: innere Nichtsichtseite
- 22: äußere Sichtseite
- 23: Öffnung
- 24: Abdeckelement
- 25: Verschlusselement / Reißverschluss
- 26: weitere Öffnung

## Patentansprüche

1. Kopfstütze (10), welche mittels einer Pour-in-Place-Technik herstellbar ist, wobei die Kopfstütze (10) mindestens ein Strukturelement (16) umfasst, welches in einen Bezug (20) der Kopfstütze (10) eingebettet ist, wobei der Bezug (20) eine erste Öffnung (23) und eine zweite Öffnung (26) umfasst, wobei die erste Öffnung (23) dazu ausgebildet ist, das mindestens eine Strukturelement (16) in das Innere des Bezugs (20) einführen zu lassen, wobei die zweite Öffnung (26) dazu ausgebildet ist, ein Schaummaterial (15) in das Innere des Bezugs (20) einführen zu lassen, wobei das Schaummaterial (15) zumindest bereichsweise das Innere des Bezugs (20) ausfüllt, wobei die Kopfstütze (10) derart hergestellt ist, dass das Schaummaterial (15) zum Zeitpunkt des Einbringens des Schaummaterials (15) in das Innere des Bezugs (20) zumindest teilweise flüssig ist, wobei mittels mindestens eines Verschlusselements (25) eine vor dem Einbringen des Schaummaterials (15) im Bezug (20) vorhandene Öffnung (23) verschließbar ist, **dadurch gekennzeichnet, dass** das mindestens eine Verschlusselement (25) in Form eines Reißverschlusses realisiert ist, wobei das mindestens eine Abdeckelement (24) im Innern (21) des Bezugs (20) vorgesehen ist, wobei das mindestens eine Abdeckelement (24) derart angeordnet ist, dass die Dichtigkeit des Bezugs (20) in Relation zum Schaummaterial (15) vergrößert wird, wobei das mindestens eine Abdeckelement (24) im Bereich eines oder beider Enden des sich länglich erstreckenden Verschlusselements (25) angeordnet ist, wobei in einem geschlossenem Zustand des Verschlusselements (25) das mindestens eine Abdeckelement (24) das sich länglich erstreckende Verschlusselement (25) abgedeckt, wobei das Abdeckelement (24) auf einer Seite der ersten Öffnung (23) mit dem Bezug (20) verbunden ist, während das Abdeckelement (24) auf der anderen Seite der ersten Öffnung (23) lediglich auf dem Bezug (20) aufliegt.

2. Kopfstütze (10) nach Anspruch 1, **dadurch gekennzeichnet, dass** der Bezug (20) eine innere Nichtsichtseite (21) und eine äußere Sichtseite (22) aufweist, wobei das Verschlusselement (25) ausschließlich von der inneren Nichtsichtseite (21) her sichtbar ist.

3. Kopfstütze (10) nach einem der vorhergehenden Ansprüchen, **dadurch gekennzeichnet, dass** das Verschlusselement (25) gegenüber einem Austreten des flüssigen Schaummaterials (15) dicht vorgesehen ist.

4. Kopfstütze (10) nach einem der vorhergehenden Ansprüchen, **dadurch gekennzeichnet, dass** die Kopfstütze (10) eine Kraftfahrzeugkopfstütze ist.

5. Verfahren zur Herstellung einer Kopfstütze (10) mittels einer Pour-in-Place-Technik, wobei die Kopfstütze (10) mindestens ein Strukturelement (16) umfasst, welches in einen Bezug (20) der Kopfstütze (10) eingebettet ist, , wobei das Verfahren die folgenden Schritte umfasst:
-- Herstellen des Bezugs (20) mit einer ersten Öffnung (23) und einer zweiten Öffnung (26); und
-- Vorsehen der ersten Öffnung (23) mit einem Verschlusselement (25); und
-- Einbringen des mindestens einen Strukturelements (16) ins Innere des Bezugs (20) durch die erste Öffnung (23); und
-- Verschließen der ersten Öffnung (23) durch das Verschlusselement (25); und
-- Einbringen von Schaummaterial (15) ins Innere des Bezugs (20) durch die zweite Öffnung (26), wobei das Schaummaterial (15) zum Zeitpunkt des Einbringens zumindest teilweise flüssig ist; **dadurch gekennzeichnet, dass** das Verfahren folgenden Schritte umfasst:
-- Verbinden mindestens eines Abdeckelements (24) mit dem Bezug (20) an einem der Endbereiche der ersten Öffnung (23); und
-- Anordnen des mindestens einen Abdeckelements (24) derart, dass die Dichtigkeit des Bezugs (20) in Relation zum Schaummaterial (15) vergrößert wird,
wobei das Verschlusselement (25) ein Reißverschluss ist,
wobei in einem geschlossenem Zustand des Verschlusselements (25) das mindestens eine Abdeckelement (24) das sich länglich erstreckende Verschlusselement (25) abdeckt, wobei das Abdeckelement (24) auf einer Seite der ersten Öffnung (23) mit dem Bezug (20) verbunden ist, während das Abdeckelement (24) auf der anderen Seite der ersten Öffnung (23) lediglich auf dem Bezug (20) aufliegt.

6. Verfahren nach Anspruch 5, **dadurch gekennzeichnet, dass** die Kopfstütze (10) eine Kraftfahrzeugkopfstütze ist.

## Claims

1. Headrest (10), which can be manufactured by means of a pour-in-place technique, wherein the headrest (10) comprises at least one structural element (16) which is embedded in a cover (20) of the headrest (10), wherein the cover (20) comprises a first opening (23) and a second opening (26), wherein the first opening (23) is designed to allow the at least one structural element (16) to be introduced into the interior of the cover (20), wherein the second opening (26) is designed to allow a foamed material (15) to be introduced into the interior of the cover (20), wherein the foamed material (15) fills the interior of the cover (20) at least in regions, wherein the headrest (10) is manufactured in such a manner that the foamed material (15) is at least partially liquid when the foamed material (15) is introduced into the cover (20), wherein an opening (23) which is present in the cover (20) before the foamed material (15) is introduced is closeable by means of a closure element (25), **characterized in that** the at least one closure element (25) is realized in the form of a zip fastener, wherein the at least one covering element (24) is provided in the interior (21) of the cover (20), wherein the at least one covering element (24) is arranged in such a manner that the tightness of the cover (20) in relation to the foamed material (15) is increased, wherein the at least one covering element (24) is arranged in the region of one or both ends of the closure element (25), which extends in an elongate manner, wherein, in a closed state of the closure element (25), the at least one covering element (24) covers the closure element (25), which extends in an elongate manner, wherein the covering element (24) is connected to the cover (20) on one side of the first opening (23) while the covering element (24) merely rests on the cover (20) on the upper side of the first opening (23).

2. Headrest (10) according to Claim 1, **characterized in that** the cover (20) has an inner non-visible side (21) and an outer visible side (22), wherein the closure element (25) is visible exclusively from the inner non-visible side (21).

3. Headrest (10) according to either of the preceding claims, **characterized in that** the closure element (25) is provided in a manner sealed against the liquid foamed material (15) escaping.

4. Headrest (10) according to one of the preceding claims, **characterized in that** the headrest (10) is a motor vehicle headrest.

5. Method for manufacturing a headrest (10) by means of a pour-in-place technique, wherein the headrest (10) comprises at least one structural element (16) which is embedded in a cover (20) of the headrest (10), wherein the method comprises the following steps:
- manufacturing the cover (20) with a first opening (23) and a second opening (26); and
- providing the first opening (23) with a closure element (25); and
- introducing the at least one structural element (16) into the interior of the cover (20) through the first opening (23); and
- closing the first opening (23) by the closure element (25); and
- introducing foamed material (15) in to the interior of the cover (20) through the second opening (26), wherein the foamed material (15) is at least partially liquid when being introduced, **characterized in that** the method comprises the following steps:
- connecting at least one covering element (24) to the cover (20) at one of the end regions of the first opening (23); and
- arranging the at least one covering element (24) in such a manner that the tightness of the cover (20) in relation to the foamed material (15) is increased,
wherein the closure element (25) is a zip fastener,
wherein, in a closed state of the closure element (25), the at least one covering element (24) covers the closure element (25), which extends in an elongate manner, wherein the covering element (24) is connected to the cover (20) on one side of the first opening (23) while the covering element (24) merely rests on the cover (20) on the other side of the first opening (23).

6. Method according to Claim 5, **characterized in that** the headrest (10) is a motor vehicle headrest.

## Revendications

1. Appuie-tête (10) pouvant être fabriqué au moyen d'une technique de coulage sur place, dans lequel
l'appuie-tête (10) comprend au moins un élément structurel (16) intégré dans une couverture (20) de l'appuie-tête (10), dans lequel la couverture (20) comprend une première ouverture (23) et une seconde ouverture (26), dans lequel la première ouverture (23) est configurée pour permettre d'introduire au moins un élément structurel (16) à l'intérieur de la couverture (20), dans lequel la seconde ouverture (26) est configurée pour permettre d'introduire un matériau à base de mousse (15) à l'intérieur de la couverture (20), dans lequel le matériau à base de mousse (15) remplit au moins partiellement l'intérieur de la couverture (20), l'appuie-tête (10) étant réalisé de telle manière que le matériau à base de mousse (15) soit au moins partiellement liquide au moment de l'introduction du matériau à base de mousse (15) à l'intérieur de la couverture (20), dans lequel
l'ouverture (23) présente dans la couverture (20) avant l'introduction du matériau à base de mousse (15) peut être fermée à l'aide d'au moins un élément de fermeture (25), **caractérisé en ce que**
le ou les éléments de fermeture (25) sont réalisés sous la forme d'une fermeture à glissière, dans lequel l'au moins un élément de revêtement (24) est prévu à l'intérieur (21) de la couverture (20), dans lequel le ou les éléments de revêtement (24) sont agencés de telle sorte que l'étanchéité de la couverture (20) par rapport au matériau en mousse (15) soit accrue, dans lequel le ou les éléments de revêtement (24) sont agencés dans la zone d'une ou des deux extrémités de l'élément de fermeture (25) qui s'étire dans le sens de la longueur, dans lequel, dans un état fermé de l'élément de fermeture (25), le ou les éléments de revêtement (24) recouvrent l'élément de fermeture étiré dans le sens de la longueur (25), l'élément de revêtement (24) étant relié à la couverture (20) d'un côté de la première ouverture (23), tandis que l'élément de revêtement (24) repose de l'autre côté de la première ouverture (23) uniquement sur la couverture (20).

2. Appuie-tête (10) selon la revendication 1, **caractérisé en ce que** la couverture (20) présente un côté intérieur non visible (21) et un côté extérieur visible (22), l'élément de fermeture (25) n'est visible que du côté intérieur non visible (21).

3. Appuie-tête (10) selon une des revendications précédentes, **caractérisé en ce que** l'élément de fermeture (25) est étanche aux fuites du matériau liquide à base de mousse (15).

4. Appuie-tête (10) selon une des revendications précédentes, **caractérisé en ce que** l'appuie-tête (10) est un appuie-tête de véhicule automobile.

5. Procédé de fabrication d'un appuie-tête (10) au moyen d'une technique de coulage sur place,
dans lequel l'appuie-tête (10) comprend au moins un élément structurel (16) intégré dans une couverture (20) de l'appuie-tête (10), le procédé comprenant les étapes suivantes :
-- réalisation de la couverture (20) avec une première ouverture (23) et une seconde ouverture (26) ; et
-- équipement de la première ouverture (23) avec un élément de fermeture (25) ; et
-- introduction d'au moins un élément structurel (16) à l'intérieur de la couverture (20) à travers la première ouverture (23) ; et
-- verrouillage de la première ouverture (23) par l'élément de fermeture (25) ; et
-- introduction de matériau à base de mousse (15) à l'intérieur de la couverture (20) à travers la seconde ouverture (26), dans lequel le matériau à base de mousse (15) est au moins partiellement liquide au moment de l'introduction ; **caractérisé en ce que** le procédé comprend les étapes suivantes :
-- raccordement d'au moins un élément de revêtement (24) à la couverture (20) dans l'une des zones d'extrémité de la première ouverture (23) ; et
-- agencement du ou des éléments de revêtement (24) de telle manière que l'étanchéité de la couverture (20) soit accrue par rapport au matériau à base de mousse (15),
l'élément de fermeture (25) étant une fermeture à glissière,
dans lequel, dans un état fermé de l'élément de fermeture (25), le ou les éléments de revêtement (24) recouvrent l'élément de fermeture qui s'étire dans le sens de la longueur (25), l'élément de revêtement (24) étant relié à la couverture (20) d'un côté de la première ouverture (23), tandis que l'élément de revêtement (24) repose de l'autre côté de la première ouverture (23) uniquement sur la couverture (20).

6. Procédé selon la revendication 5, **caractérisé en ce que** l'appuie-tête (10) est un appuie-tête de véhicule automobile.
